# EUROPEAN PATENT SPECIFICATION

(11) **EP 3 374 173 B1**
(45) Date of publication and mention of the grant of the patent: **19.08.2020**
(21) Application number: 16795234.0
(22) Date of filing: 10.11.2016
(51) Int. Cl.: B31B 50/25, B31F 1/08, B23K 26/00, B23K 26/40, B31B 100/00

(54) **LASER INDUCED STRUCTURAL MODIFICATION OF PAPERBOARDS**
LASERINDUZIERTE STRUKTURELLE MODIFIZIERUNG VON KARTONS
MODIFICATION STRUCTURELLE INDUITE PAR LASER DE CARTONS

(30) Priority: 11.11.2015 EP 15020225
(43) Date of publication of application: 19.09.2018
(73) Proprietor: BOBST MEX SA, 1031 Mex (CH)
(72) Inventor: EQUIS, Sébastien, 1305 Penthalaz (CH); HOFFMANN, Patrik, 3054 Schüpfen (CH); PILLONEL, Gilles, 1473 Font (CH); VAUCHER, Sébastien, 3600 Thun (CH); WASMER, Kilian, 1871 Choëx (CH)
(74) Representative: Wagner, Sigrid
(86) International application number: PCT/EP2016/025141
(87) International publication number: WO 2017/080677

(56) References cited:
- EP-A1- 0 357 841
- WO-A1-99/29496
- DE-A1- 19 646 331

## Description

### Field of invention

The present invention relates to a method for locally modifying the structure of a paperboard.

### Art Background

Nowadays paperboards are a favourite material in the packaging industry. Common paperboards form a robust but also formable packaging. Furthermore, the paperboards are suitable for imprinting product description and promotion symbols.

In order to form a packaging out of paperboards, creasing methods are applied. Creasing is a local weakening of paperboard that allows bending along a specific line. It is widely used in the packaging industry for the production of paperboard boxes, for example.

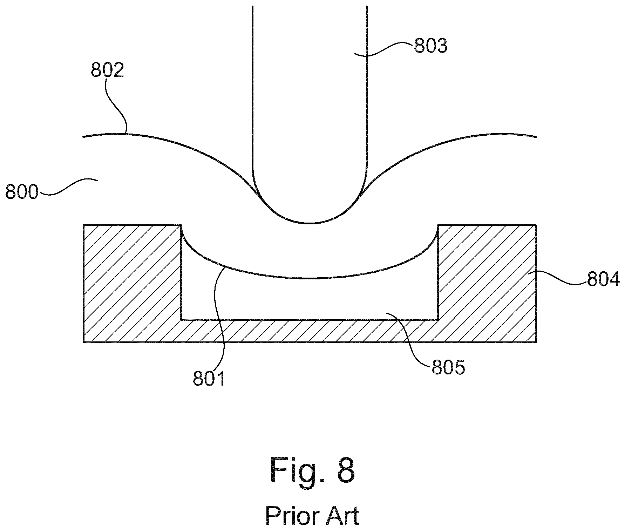

Nowadays, the creasing process is done by mechanical interaction using a creasing rule 803 and a cavity 805 of a conventional support table 804 onto which the paperboard 800 is located as shown in **Fig. 8****.** During the creasing process the mechanical creasing rule 803 usually presses the paperboard 800 on the printed outer liner 802 and a creasing line (rib) is being formed along the inner liner 801 of the paperboard 800. Once creased, the paperboard 800 can be easily bent in the direction of a creasing line. The inner liner 801 and outer liner 802 are the first layers of cellulose on each side of the paperboard 800. A coating is usually covering the liners 801, 802 for enhancing the smoothness and printability. This creasing method allows optically proper creasing lines with no cracking of the inner and outer liners 801, 802 after bending. However, core layers usually separate from one another during the creasing so that the structure becomes more flexible without elongation weakening.

However, each paperboard product needs its respective creasing rule 803 and matrix. This may cause storage problem, costs and a limited flexibility. The installation of the creasing rule 803 is also time consuming, which is a limiting factor for the production of small series.

### Summary of the Invention

It may be an object of the present invention to provide an efficient and smooth locally modifying the structure and machining of a paperboard.

This object is solved by a method for locally modifying the structure of a paperboard according to independent claim 1.

According to a first aspect of the present invention, a method for mild locally modifying a structure of a paperboard is presented. According to the method, the paperboard to be penetrated is provided. A penetrating region of the paperboard is penetrated by a laser radiation such that moisture in the penetrating region (for example specifically in a core section of the paperboard) evaporates for modifying the structure the penetrating region.

A paperboard describes generally a heavy-duty paper of various strengths, ranging from a simple arrangement of a single thick sheet of paper to complex configurations featuring multiple corrugated and flat layers. The paperboard may be made of a first cover layer and a second cover layer between which a core section of the paperboard is arranged. The cover layers may define layers which enclose the core section. The first cover layer may be a top layer and the second cover layer may be a bottom layer, or vice versa. The first and/or second cover layer may be a coated cover layers or untreated paper layers, for example.

Specifically, a duplex paperboard is available which is made of e.g. recycled fibers. It may have in the front side (e.g. the first cover layer) a triple pigment coating suitable for printing. The backside (e.g. the second cover layer) may have a thin coating that enhance the smoothness of the paperboard. The core may be made of approx. 60% Post Consumer Waste (PCW), approx. 20% Post Industrial Waste (PIW) and approx. 10% fresh mechanical pulp. Except the layer of unprinted PIW that is white, all the rest is grey. This type of paperboard is cheap and has many packaging applications.

A high quality fully coated white (bleached) paperboard may have both cover layers with a white pigment coating enhancing printability. The core section comprises layers made of bleached chemical pulp. Besides the advantage of a white color, white paperboard made out of bleached chemical pulp has the advantage to be stiffer.

In paperboard industry it is an aim to print the cover layers of the paperboard and to crease and bend the paperboards very mild and smooth without damaging the structure of the paperboard. According to the approach of the present invention, the laser radiation is adjusted to evaporate moisture within the paperboard without burning, ablating or cutting the layers. The moisture may origin from the air within the core section and/or from the paperboard material within the core section itself. The evaporated moisture causes a volume increase of the water vapor, heated by the irradiation. This causes a delamination of the layers, i.e. of the cellulose fibre layers, in the core section of the paperboard. In other words, the evaporated moisture causes a weakening because the bond between the layers is weakened and/or is cancelled i.e. due to a mechanical stress (i.e. by the caused vapour pressure). Hence, the penetration region has less bending resistance and the risk of cracking the fibres during the machining, e.g. during bending, is reduced.

Summarizing, by penetrating the penetration region by the laser radiation, a locally modifying of the structure of the paperboard is achieved. For example, a weaker and hence very flexible region may be formed so that bending lines may be generated. The swelling effect can also be used for creating complex and harder embossing structures in the cover layers (such as graphic structures, Braille).

After the machining, i.e. the creasing or the swelling of the layers as described above, the paperboard may have a permanent weakness due to the delaminating of the layers so that the cardboard can be folded many days (or months) later. The role of the water is to evaporate and do the mechanical work for the delamination (i.e. breaking the bonds between the e.g. inner layers).

According to a further exemplary embodiment the method further comprises the step of creasing the paperboard along the penetrating region, wherein the penetrating region describes a creasing line along which the paperboard is intended to be bent. As described above, a smooth and non-destroying creasing of the paperboard along the creasing line may be accomplished.

According to a further exemplary embodiment, a moisture level within the penetrating section and in particular the core section at the penetrating region before the step of penetrating the penetrating region is adjusted. In the step of adjusting the moisture level, at least one moisture levelling additive is introduced for gas generation by the laser radiation within e.g. the core section at the penetrating region such that the penetrating section is weakened.

Accordingly, the evaporated moisture may be adjusted and hence a volume increase of the vapor, heated by the irradiation. This causes a controlled above described delamination of the layers in the core section of the paperboard. The controlled evaporated moisture causes a weakening because the bond between the layers is weakened and/or is cancelled i.e. due to a mechanical stress (i.e. by the caused pressure of the vapour). Hence, the penetration region has less bending resistance and the risk of cracking the fibres during the machining, e.g. during bending, is reduced.

Summarizing, in order to achieve a sufficient evaporation of moisture in order to have a desired swelling of the penetrating region, the moisture, i.e. the amount of water or other suitable liquid to be evaporated within the core section, may be adjusted. The moisture may be adjusted for example by applying wet tissue along the penetrating region, or by locally spraying, ink jetting, or printing water or another suitable liquid such as alcohols, polyalcohols, organic ethers, organic or inorganic esters, hydrocarbons, or silicone oils, or mixtures of two or more of these substances. Furthermore, the paperboard may be located in a climate chamber (e.g. a desiccator or humidity controlled container) where a desired humidity (and moisture, respectively) is adjustable for increasing the moisture of the paperboard. It is also possible to inject a liquid, such as water, saturated salt solutions and/or aluminum hydroxide directly into the core section before penetrating the penetrating region with the laser radiation.

In particular, specific additives for gas production may be added in inner layers of the multi-layered paperboard. The specific gas producing additives may be already present in paperboard and they could be intentionally added for better laser creasing ability by evaporating parts of or entirely the specific gas producing additives.

The liquid may serve as a vapor source and/or to adjust a scattering of the laser radiation inside cardboard or paperboard material.

According to a further exemplary embodiment, the laser radiation comprises a power density of approximately 10⁴ W/cm² to approximately 10⁶ W/cm², preferably 10⁵ W/cm².

According to a further exemplary embodiment, the laser radiation comprises deposited power, in particular within the core section of the paperboard of approximately 10 W/cm² to approximately 10³ W/cm², preferably 10² W/cm².

According to a further exemplary embodiment, the laser radiation has a wavelength of approximately 1000 nm to approximately 11000 nm, in particular approximately 4000 nm to approximately 8000 nm.

Hence, by the above described values for the power density, the deposited power and the wavelength a proper evaporation of moisture without destroying the structure of the paperboard material may be achieved.

Other types of paperboards might work best with either higher or smaller power densities and also other wavelength optima might be desirable for other paperboards.

According to a further exemplary embodiment, the laser radiation is a pulsed laser radiation generated by a pulsed laser device. The laser device may be selected from the group consisting of ultra-short pulsed lasers and short pulsed lasers.

According to a further exemplary embodiment, the laser radiation is a continuous laser radiation generated by a continuous laser device.

According to a further exemplary embodiment, the laser radiation is generated by a diode laser.

The laser radiation may be generated by a Near Infrared Laser (NIR) Nd:YAG 1064nm laser, other rare earth doped crystals such as Ytterbium or rare earth element doped fibre lasers with wavelength in the near infrared, e.g. 1074nm. Holmium: Yttrium-Iron-Garnet YIG, Holmium: Yttrium-Aluminium-Garnet YAG, or Holmium: Yttrium-Lithium-Fluoride YLF at a wavelength of 2100nm; or mid Infrared lasers (MIR) Fe²⁺:ZnSe lasers can emit at 3.7-5.1 µm; CO-Laser 5200nm - 6300nm.

The laser radiation may be generated by a carbon dioxide laser (e.g. 9100nm - 11000nm).

The penetrating region may be penetrated by the laser radiation such that penetration spots at which the moisture evaporates are generated. Additionally or alternatively the penetrating region may be penetrated by the laser radiation such that a constant line (straight and/or curved) along which the moisture evaporates is generated.

Two adjacent penetration spots are spaced apart from each other with a distance. Alternatively, two adjacent penetration spots may overlap such that a continuous penetration region is formed, wherein the plurality of penetration spots partially overlap with neighbouring penetration spots.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic view of a device for modifying the structure a paperboard according to an exemplary embodiment of the present invention.
Fig. 2 shows a schematic view of a continuous penetration line along a paperboard according to an exemplary embodiment of the present invention.
Fig. 3 shows a schematic view of a penetration spots along a paperboard.
Fig. 4 shows a schematic view of a flow chart of the method for modifying the structure a paperboard according to an exemplary embodiment of the present invention.
Fig. 5 shows a schematic view of a paperboard onto which first cover layer a letter is formed, the provision of letters not forming part of the present invention.
Fig. 6 shows a sectional view of a paperboard not forming part of the present invention.
Fig. 7 shows a schematic view of a paperboard comprising a plurality of creasing lines according to an exemplary embodiment of the present invention.
Fig. 8 shows a schematic view of a conventional creasing device.

### Detailed Description of Exemplary Embodiments

The illustrations in the drawings are schematic. It is noted that in different figures similar or identical elements are provided with the same reference signs.

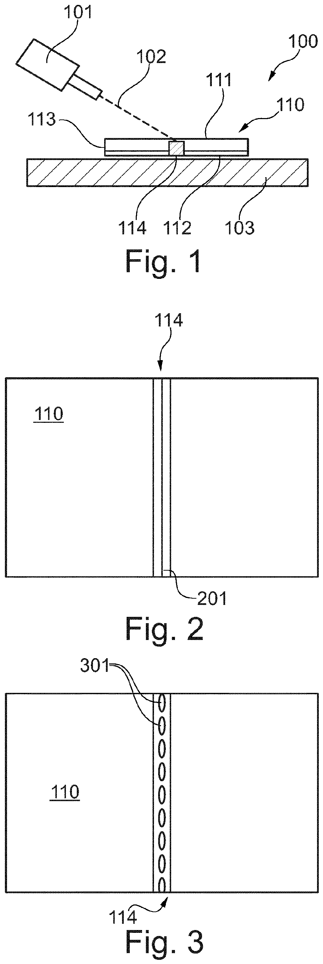

**Fig.1** shows a device 100 for locally modifying the structure a structure of a paperboard 110. The paperboard 110 is supported onto a holding device 103, e.g. a workbench. A laser device 101 is arranged relatively to the paperboard 110 for penetrating a penetrating region 114 of the paperboard 110 by a laser radiation 102 such that the moisture in the core section 113 evaporates for modifying the structure (e.g. weakening or embossing) of a penetrating region 114. The paperboard 110 is made of a first cover layer 111 and a second cover layer 112 between which a core section 113 of the paperboard 110 is arranged. A penetrating region 114 of the paperboard 110 is penetrated by a laser radiation 102 such that a moisture in the core section 113 evaporates for modifying the structure of the penetrating region 114.

The laser radiation 102 is adjusted to evaporate moisture within the paperboard 110. The moisture may origin from the air within the core section 113 and/or from the paperboard material within the core section 113 itself. The evaporated moisture causes a delamination of the layers in the core section of the paperboard. Furthermore, by penetrating the penetrating region 114 by the laser radiation, a very flexible penetrating region 114 may be formed so that complex graphic structures or creasing lines may be generated.

The weakened penetrating region 114 due to evaporation of moisture may be used for bending the paperboard 110 along the penetrating region 114, wherein the penetrating region describes a creasing line along which the paperboard 110 is intended to be bend. As described above, a smooth and non-destroying bending of the paperboard 110 along a creasing line 201 (see Fig. 2) may be accomplished.

**Fig. 2** shows a schematic view of a continuous penetration line, such as a creasing line 201, along a paperboard 110 according to an exemplary embodiment of the present invention. The laser radiation 102 may be for example a continuous laser radiation generated by a continuous laser device such that a constant line (straight and/or curved) along which the moisture evaporates is generated.

**Fig. 3** shows a schematic view of a penetration spots 301 along a paperboard 110. The laser radiation 102 is a e.g. pulsed laser radiation generated by a pulsed laser device. The laser device 101 may be selected from the group consisting of ultra-short pulsed lasers and short pulsed lasers.

The penetrating region 114 is penetrated by the laser radiation such that penetration spots 301 at which the moisture evaporates are generated. Two adjacent penetration spots 301 are spaced apart from each other with a distance. Alternatively, two adjacent penetration spots 301 may overlap such that a continuous penetration region 114 is formed, wherein the plurality of penetration spots 114 partially overlap with neighbouring penetration spots 114.

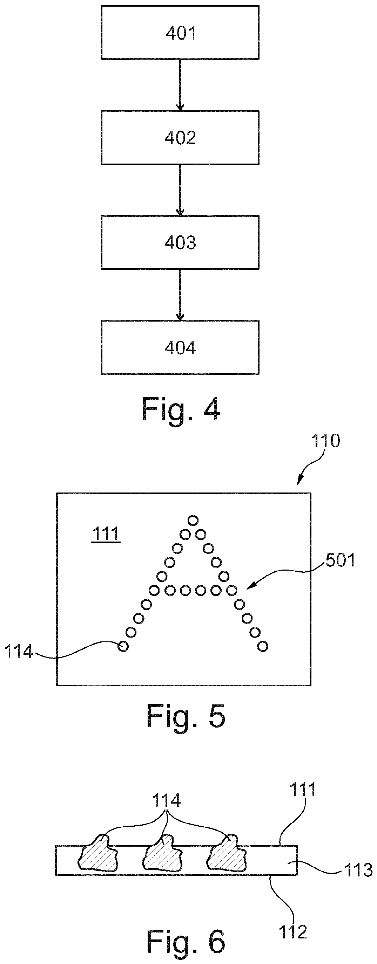

**Fig. 4** shows a schematic view of a flow chart of the method for modifying the structure a paperboard 110 according to an exemplary embodiment of the present invention. According to the method, the paperboard 110 to be creased is provided (step 401), wherein the paperboard 110 is made of a first cover layer 111 and a second cover layer 112 between which a core section 113 of the paperboard 110 is arranged. A penetrating region 114 of the paperboard 110 is penetrated by a laser radiation 102 (see step 403) such that a moisture in the core section 113 evaporates for modifying the structure of the penetrating region 114.

The method further comprises adjusting the moisture within the core section at the penetrating region before the step of penetrating the penetrating region (step 402). In order to achieve a sufficient evaporation of moisture in order to have a desired swelling of the penetrating region 114, the moisture within the core section 113 may be adjusted.

Finally, the paperboard 110 is creased 404 along the penetrating region 114, wherein the penetrating region 114 describes a creasing line 201 along which the paperboard 110 is intended to be bent.

**Fig. 5** shows a schematic view of a paperboard 110 onto which the first cover layer 111 an embossing graphic structure (graphic symbol 501), such as a letter, is formed. In the step of penetrating the penetrating region 114 the core section 113 is penetrated in such a way that the evaporated moisture deforms at least the first cover layer 111, wherein the penetrating region describes the graphic structure 501, in particular a Braille letter, number, or any symbol.

Hence, by adjusting the laser radiation 102 in such a way that more moisture in the core section 113 evaporates, the core section 113 and additionally at least the first cover layer 111 swells due to the high evaporating moisture. The swollen/swelled section of the first cover layer 111 has protrusions and sinks which are visible and haptic sensible. Hence, by the deformation of the at least first cover layer 111 due to the evaporation of moisture, desired graphic symbols 501 can be printed onto the first layer. The graphic symbols 501 may be for example pictures and letters for example. Specifically, Braille letters, numbers or any symbol may be formed onto the first layer.

In particular, a swelling additive may be injected into the core section 113, which is adapted to form a hardened structure within the core section 113 and/or the first cover layer 111 in reaction with the laser radiation 102. Hence, a robust and withstanding embossing graphic structure 501 is formed.

**Fig. 6** shows a sectional view of a paperboard 110. Specifically, the sectional view in Fig. 6 shows the paperboard 110 as shown in Fig. 5. In order to form an embossing graphic structure, i.e. a graphic symbol, 501 in the first layer 111, the laser radiation 102 evaporates the moisture in the core section 113 within the penetration region 114 such that also the first layer 111 swells. Hence, protrusions which are visible and haptic sensible are formed. After swelling the paperboard 110, the protrusions remain visible and haptic sensible.

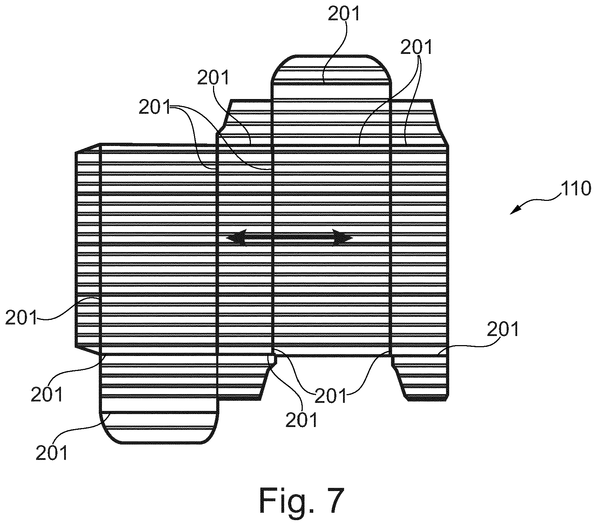

**Fig. 7** shows a schematic view of a paperboard 110 comprising a plurality of creasing lines 201 according to an exemplary embodiment of the present invention. The pattern of the creasing lines 201 is formed by the laser radiation 102. The creasing lines 201 form delaminated sections of the paperboard 110. In a next step, the paperboard 110 may be bended along the creasing lines 201, so that e.g. a box may be formed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: device
- 101: laser device
- 102: laser radiation
- 103: holding device
- 110: paperboard
- 111: first cover layer
- 112: second cover layer
- 113: core section
- 114: penetrating region
- 401: step of providing
- 402: step of adjusting a moisture
- 403: step of penetrating
- 404: step of creasing
- 201: creasing line
- 301: penetration spots
- 501: graphic structure
- 800: conventional paperboard
- 801: inner liner
- 802: outer liner
- 803: conventional creasing rule
- 804: conventional support table
- 805: cavity

## Claims

1. Method for locally modifying a structure of a paperboard (110), the method comprising
providing (401) the paperboard (110),
penetrating (403) a penetrating region (114) of the paperboard (110) by a laser radiation (102) such that a moisture in the penetrating region (114) evaporates for modifying the structure of the penetrating region (114)
wherein the penetrating region (114) describes a creasing line (201) along which the paperboard (110) is intended to be bent.

2. Method according to claim 1, further comprising
creasing (404) the paperboard (110) along the penetrating region (114).

3. Method according to one of the claims 1 to 2, further comprising
adjusting (402) a moisture level within the core section (113) at the penetrating region (114) before the step of penetrating the penetrating region (114),
wherein the step of adjusting the moisture level comprises introducing at least one moisture levelling additive for gas generation by the laser radiation (102) within a core section (113) of the paperboard (110) at the penetrating region (114) such that the penetrating region (114) is weakened.

4. Method according to one of the claims 1 to 3,
wherein the laser radiation (102) comprises a power density of 10⁴ W/cm² to 10⁶ W/cm², preferably 10⁵ W/cm²

5. Method according to one of the claims 1 to 4,
wherein the laser radiation (102) comprises deposited power of 10 W/cm² to 10³ W/cm², preferably 10² W/cm² W/cm².

6. Method according to one of the claims 1 to 5,
wherein the laser radiation (102) has a wavelength of 1000 nm to 11000 nm, in particular 4000 nm to 8000 nm.

7. Method according to one of the claims 1 to 6,
wherein the laser radiation (102) is a pulsed laser radiation (102) generated by a pulsed laser device (101).

8. Method according to one of the claims 1 to 6,
wherein the laser radiation (102) is a continuous laser radiation (102) generated by a continuous laser device (101).

9. Method according to one of the claims 1 to 8,
wherein the laser radiation (102) is generated by a diode laser.

10. Method according to one of the claims 1 to 9,
wherein the laser radiation (102) is generated by Nd:YAG 1064nm laser or a Ytterbium doped fibre laser 1074nm.

11. Method according to one of the claims 1 to 10,
wherein the laser radiation (102) is generated by a carbon dioxide laser.

## Patentansprüche

1. Verfahren zur lokalen Modifizierung einer Struktur eines Kartons (110), wobei das Verfahren umfasst
Bereitstellen (401) des Kartons (110),
Eindringen (403) in eine Eindringregion (114) des Kartons (110) mit einer Laserstrahlung (102), sodass Feuchtigkeit in der Eindringregion (114) verdampft, um die Struktur der Eindringregion (114) zu modifizieren
wobei die Eindringregion (114) eine Falzlinie (201) beschreibt, entlang derer der Karton (110) bestimmt ist, gebogen zu werden.

2. Verfahren nach Anspruch 1, weiter umfassend
Falzen (404) des Kartons (110) entlang der Eindringregion (114).

3. Verfahren nach einem der Ansprüche 1 bis 2, weiter umfassend
Anpassen (402) des Feuchtigkeitsniveaus innerhalb der Kernsektion (113) in der Eindringregion (114) vor dem Schritt des Eindringens in die Eindringregion (114),
wobei der Schritt des Anpassens des Feuchtigkeitsniveaus das Einbringen mindestens eines Feuchtigkeitsnivellierungsadditivs zur Gaserzeugung durch Laserstrahlung (102) innerhalb einer Kernsektion (113) des Kartons (110) in der Eindringregion (114) umfasst, sodass die Eindringregion (114) geschwächt wird.

4. Verfahren nach einem der Ansprüche 1 bis 3,
wobei die Laserstrahlung (102) eine Leistungsdichte von 10⁴ W/cm² bis 10⁶ W/cm², vorzugsweise 10⁵ W/cm² umfasst.

5. Verfahren nach einem der Ansprüche 1 bis 4,
wobei die Laserstrahlung (102) eine abgeschiedene Leistung von 10 W/cm² bis 10³ W/cm², vorzugsweise 10² W/cm² umfasst.

6. Verfahren nach einem der Ansprüche 1 bis 5,
wobei die Laserstrahlung (102) eine Wellenlänge von 1000 nm bis 11000 nm, insbesondere 4000 nm bis 8000 nm aufweist.

7. Verfahren nach einem der Ansprüche 1 bis 6,
wobei die Laserstrahlung (102) eine gepulste Laserstrahlung (102) ist, die durch eine gepulste Laservorrichtung (101) generiert wird.

8. Verfahren nach einem der Ansprüche 1 bis 6,
wobei die Laserstrahlung (102) eine kontinuierliche Laserstrahlung (102) ist, die durch eine kontinuierliche Laservorrichtung (101) generiert wird.

9. Verfahren nach einem der Ansprüche 1 bis 8,
wobei die Laserstrahlung (102) durch einen Diodenlaser generiert wird.

10. Verfahren nach einem der Ansprüche 1 bis 9,
wobei die Laserstrahlung (102) durch einen Nd:YAG 1064nm Laser oder eine Ytterbium dotierten Faserlaser 1074nm generiert wird.

11. Verfahren nach einem der Ansprüche 1 bis 10,
wobei die Laserstrahlung (102) durch einen Kohlendioxid-Laser generiert wird.

## Revendications

1. Procédé pour modifier localement une structure d'un carton (110), le procédé comprenant
la fourniture (401) du carton (110),
la pénétration (403) d'une région de pénétration (114) du carton (110) par un rayonnement laser (102) de telle sorte qu'une humidité dans la région de pénétration (114) s'évapore pour modifier la structure de la région de pénétration (114)
dans lequel la région de pénétration (114) décrit une ligne de pliage (201) le long de laquelle le carton (110) est destiné à être courbé.

2. Procédé selon la revendication 1, comprenant en outre
le pliage (404) du carton (110) le long de la région de pénétration (114).

3. Procédé selon l'une des revendications 1 à 2, comprenant en outre
l'ajustement (402) d'un niveau d'humidité dans la section noyau (113) au niveau de la région de pénétration (114) avant l'étape de pénétration de la région de pénétration (114),
dans lequel l'étape d'ajustement du niveau d'humidité comprend l'introduction d'au moins un additif de mise à niveau d'humidité pour la génération de gaz par le rayonnement laser (102) dans une section noyau (113) du carton (110) au niveau de la région de pénétration (114) de telle sorte que la région de pénétration (114) est fragilisée.

4. Procédé selon l'une des revendications 1 à 3,
dans lequel le rayonnement laser (102) comprend une densité de puissance de 10⁴ W/cm² à 10⁶ W/cm², de préférence de 10⁵ W/cm².

5. Procédé selon l'une des revendications 1 à 4,
dans lequel le rayonnement laser (102) comprend une puissance déposée de 10 W/cm² à 10³ W/cm², de préférence de 10² W/cm².

6. Procédé selon l'une des revendications 1 à 5,
dans lequel le rayonnement laser (102) présente une longueur d'onde de 1000 nm à 11000 nm, en particulier de 4000 nm à 8000 nm.

7. Procédé selon l'une des revendications 1 à 6,
dans lequel le rayonnement laser (102) est un rayonnement laser à impulsions (102) généré par un dispositif laser à impulsions (101).

8. Procédé selon l'une des revendications 1 à 6,
dans lequel le rayonnement laser (102) est un rayonnement laser continu (102) généré par un dispositif laser continu (101).

9. Procédé selon l'une des revendications 1 à 8,
dans lequel le rayonnement laser (102) est généré par un laser diode.

10. Procédé selon l'une des revendications 1 à 9,
dans lequel le rayonnement laser (102) est généré par un laser Nd : YAG 1064 nm ou un laser à fibres dopées à l'ytterbium 1074 nm.

11. Procédé selon l'une des revendications 1 à 10,
dans lequel le rayonnement laser (102) est généré par un laser au dioxyde de carbone.
